# EUROPÄISCHE PATENTANMELDUNG

(11) **EP 4 663 980 A1**
(43) Veröffentlichungstag der Anmeldung: **17.12.2025**
(21) Anmeldenummer: 24181644.6
(22) Anmeldetag: 12.06.2024
(51) Int. Cl.: F16J 15/06, F16J 15/08, F16J 15/12, F16H 57/029

(54) **DICHTUNG FÜR EINE DICHTUNGSANORDNUNG FÜR EIN AUTOMATISIERTES SCHALTGETRIEBE FÜR EIN FAHRZEUG, INSBESONDERE NUTZFAHRZEUG, DICHTUNGSANORDNUNG, AUTOMATISIERTES SCHALTGETRIEBE, FAHRZEUG**

(71) Anmelder: ZF CV Systems Global GmbH, 3006 Bern (CH)
(72) Erfinder: DEITERS, Henning, 30519 Hannover (DE)
(74) Vertreter: Schäferjohann, Volker

(57) **Zusammenfassung**

Dichtung (260) für eine Dichtungsanordnung (250) für ein automatisiertes Schaltgetriebe (210) für ein Fahrzeug (200a), insbesondere Nutzfahrzeug (200b), wobei die Dichtungsanordnung (250) eine erste Gehäusekomponente (251) mit einem eine erste Vertiefung (255) umfassenden ersten Ausrichtungsabschnitt (253) und eine zweite Gehäusekomponente (252) mit einem zweiten Ausrichtungsabschnitt (254) umfasst; und die Dichtung (260) entlang einer Dichtbahn (265) zum Erzielen einer Dichtwirkung zwischen der ersten Gehäusekomponente (251) und der zweiten Gehäusekomponente (252) einen Schichtaufbau (261) aufweist; die Dichtung (260) zum Bilden des Schichtaufbaus (261) einen zweiseitigen Träger (262), eine auf einer ersten Seite (270) des Trägers (262) angeordnete erste Elastomerschicht (263) und eine auf einer von der ersten Seite (270) verschiedenen zweiten Seite (271) des Trägers (262) angeordnete zweite Elastomerschicht (264) aufweist; der Träger (262) einen sich bezüglich der Dichtbahn (265) lateral erstreckenden Anordnungsabschnitt (266) aufweist; wobei der Anordnungsabschnitt (266) dazu eingerichtet ist, bei einer Montage der Dichtung (260) zwischen der erste Gehäusekomponente (251) und der zweite Gehäusekomponente (252) durch den zweiten Ausrichtungsabschnitt (254) deformiert zu werden und in die erste Vertiefung (255) einzugreifen.

## Beschreibung

Die Offenbarung betrifft eine Dichtung für eine Dichtungsanordnung für ein automatisiertes Schaltgetriebe für ein Fahrzeug, insbesondere Nutzfahrzeug. Die Offenbarung betrifft gleichermaßen eine Dichtungsanordnung für ein automatisiertes Schaltgetriebe für ein Fahrzeug, insbesondere Nutzfahrzeug, ein automatisiertes Schaltgetriebe für ein Fahrzeug, insbesondere Nutzfahrzeug, und ein Fahrzeug, insbesondere Nutzfahrzeug.

Dichtungsanordnungen für automatisierte Schaltgetriebe sind aus dem Stand der Technik bekannt. Dabei ist es bekannt, dass zwei Gehäuseteile in Kontakt mit Elastomerschichten einer Dichtung, beispielsweise einer Flachdichtung, sind. Die Elastomerschichten sowie die Dichtung sind jedoch nicht starr mit den Gehäuseteilen verbunden, wodurch eine laterale Bewegung zwischen den Gehäuseteilen möglich sein kann, also eine Bewegung entlang der Kontaktfläche zwischen den Gehäuseteilen. Eine derartige laterale Bewegung kann jedoch eine vorzeitige Alterung der Dichtung und mögliche Undichtigkeiten bewirken, wodurch beispielweise bei einem automatisierten Schaltgetriebe elektrische Verbindungen und/oder andere Komponenten korrodieren können.

DE 10 2020 118 052 A1 offenbart eine Betätigungsvorrichtung für ein automatisiertes Schaltgetriebe eines Kraftfahrzeugs, wobei die Betätigungsvorrichtung einen druckmittelbetriebenen Aktuator mit einem Kolben und einer mit dem Wähl- oder Schaltelement des Schaltgetriebes verbindbare Kolbenstange aufweist, wobei der Kolben in einem zylindrischen Aufnahmeraum des Gehäuses der Betätigungsvorrichtung radial abgedichtet angeordnet und dort koaxial bewegbar ist. Das Gehäuse besteht aus einem Unterteil und einem Oberteil, welche mittels eines Dichtelements gegeneinander abgedichtet sind. Das Dichtelement ist elastisch ausgebildet und weist mindestens zwei integral an diesem ausgebildete und mit deren Längserstreckung parallel zur Längsmittenachse ausgerichtete Dome auf.

Vor dem Hintergrund dieses Standes der Technik besteht eine Aufgabe der vorliegenden Offenbarung darin, eine Vorrichtung anzugeben, welche geeignet ist, den Stand der Technik zu bereichern und zumindest die oben genannten Aspekte des Standes der Technik zu verbessern. Insbesondere ist es die Aufgabe der Offenbarung, eine bessere Abdichtung insbesondere für Gehäuseteile eines automatisierten Schaltgetriebes bereitzustellen und eine laterale Bewegung der Gehäuseteile einzuschränken und/oder zu verhindern.

Danach wird die Aufgabe gemäß einem Aspekt der Offenbarung durch eine Dichtung für eine Dichtungsanordnung für ein automatisiertes Schaltgetriebe für ein Fahrzeug, insbesondere Nutzfahrzeug, gelöst, wobei die Dichtungsanordnung eine erste Gehäusekomponente mit einem eine erste Vertiefung umfassenden ersten Ausrichtungsabschnitt und eine zweite Gehäusekomponente mit einem zweiten Ausrichtungsabschnitt umfasst; und die Dichtung entlang einer Dichtbahn zum Erzielen einer Dichtwirkung zwischen der ersten Gehäusekomponente und der zweiten Gehäusekomponente einen Schichtaufbau aufweist; die Dichtung zum Bilden des Schichtaufbaus einen zweiseitigen Träger, eine auf einer ersten Seite des Trägers angeordnete erste Elastomerschicht und eine auf einer von der ersten Seite verschiedenen zweiten Seite des Trägers angeordnete zweite Elastomerschicht aufweist; der Träger einen sich bezüglich der Dichtbahn lateral erstreckenden Anordnungsabschnitt aufweist; wobei der Anordnungsabschnitt dazu eingerichtet ist, bei einer Montage der Dichtung zwischen der erste Gehäusekomponente und der zweite Gehäusekomponente durch den zweiten Ausrichtungsabschnitt deformiert zu werden und in die erste Vertiefung einzugreifen.

Es wurde erkannt, dass der Träger einen Anordnungsabschnitt aufweisen kann. Der Träger ist gegenüber der Dichtbahn lateral angeordnet, um die Dichtungswirkung der Dichtbahn nicht zu beeinträchtigen. Dabei kann die laterale Anordnung des Anordnungsabschnitts gegenüber der Dichtbahn bedeuten, dass die Dichtbahn und der Anordnungsabschnitt voneinander beabstandet angeordnet sind beziehungsweise der Anordnungsabschnitt eine Hauptausdehnungsrichtung aufweist und der Anordnungsabschnitt zu der Dichtbahn mit einem Abstand senkrecht zu der Hauptausdehnungsrichtung angeordnet ist.

Der Anordnungsabschnitt bewirkt, dass der Träger in dem Anordnungsabschnitt bei der Montage der ersten Gehäusekomponente und der zweiten Gehäusekomponente deformiert wird. Die Deformation des Trägers kann dabei gezielt derart bewirkt werden, dass der Anordnungsabschnitt in die erste Vertiefung eingreift. Durch das Eingreifen des Anordnungsabschnitts in die erste Vertiefung kann eine laterale Bewegung des Trägers und somit der gesamten Dichtung beschränkt, vermindert und/oder minimiert werden.

Die Offenbarung ermöglich so eine Beschränkung, Verminderung und/oder Vermeidung einer lateralen Bewegung der Dichtung. Damit kann die Dichtfunktion der Dichtung zuverlässiger aufrechterhalten werden, womit eine bessere Abdichtung erzielt wird.

Optional ist der Anordnungsabschnitt dazu eingerichtet, bei der Montage der Dichtung die erste Vertiefung mit dem Anordnungsabschnitt formschlüssig zu verbinden. Durch eine formschlüssige Verbindung zwischen dem Anordnungsabschnitt und der ersten Vertiefung wird zuverlässig und effektiv eine Beschränkung von Bewegungsmöglichkeiten der Dichtung erzielt. Durch die formschlüssige Verbindung kontaktieren sich der Anordnungsabschnitt und die erste Vertiefung, wobei der Kontakt insbesondere die laterale Bewegung einschränkt.

Optional weist die Dichtung in dem Anordnungsabschnitt ein auf dem Träger angeordnetes erstes Deformationselement zum Deformieren des Anordnungsabschnitts bei der Montage auf. Dabei wurde erkannt, dass das auf dem Träger angeordnete erste Deformationselement gegenüber dem Träger hervorspringt beziehungsweise von dem Träger absteht. Damit wird erzielt, dass der Träger in dem Anordnungsabschnitt bei der Montage mittelbar über das Deformationselement deformiert wird, da bei der Montage das Deformationselement zuerst mit dem Anordnungsabschnitt in mechanischen Kontakt kommt und so Kräfte zu dem Träger überträgt. Dabei wurde erkannt, dass das Deformationselement besonders wohldefiniert die Verformung des Trägers in dem Anordnungsabschnitt bewirken kann.

Optional ist die Dichtung dazu eingerichtet, im montierten Zustand, mit der ersten Elastomerschicht die erste Gehäusekomponente zu kontaktieren und mit der zweiten Elastomerschicht die zweite Gehäusekomponente zu kontaktieren; und das erste Deformationselement ist auf der ersten Seite des Trägers angeordnet. Damit wird erzielt, dass die Dichtung bereits durch eine der Gehäusekomponenten beziehungsweise einen der Ausrichtungsabschnitte in der lateralen Bewegung gehindert wird.

Optional ist das Deformationselement durch eine weitere Elastomerschicht und/oder durch eine Prägung gebildet. Eine weitere Elastomerschicht beziehungsweise ein auf dem Träger in dem Anordnungsabschnitt angeordnetes Elastomerelement und/oder die Prägung sind effektiv, kontrolliert und wiederholgenau herstellbare Deformationselemente.

Optional weist das Deformationselement einen kreisförmigen und/oder kreuzförmigen Querschnitt auf. Damit kann das Deformationselement besonders einfach hergestellt werden. Alternativ kann das Deformationselement auch einen eckigen Querschnitt aufweisen.

Optional weist der zweite Ausrichtungsabschnitt eine zweite Vertiefung auf; und der Anordnungsabschnitt ist dazu eingerichtet, bei einer Montage der Dichtung zwischen der erste Gehäusekomponente und der zweite Gehäusekomponente durch den ersten Ausrichtungsabschnitt deformiert zu werden und in die zweite Vertiefung einzugreifen. Der zweite Anordnungsabschnitt bewirkt, dass der Träger in dem Anordnungsabschnitt bei der Montage der ersten Gehäusekomponente und der zweiten Gehäusekomponente deformiert wird. Die Deformation des Trägers kann dabei gezielt derart bewirkt werden, dass der zweite Anordnungsabschnitt in die zweite Vertiefung eingreift. Durch das Eingreifen des zweiten Anordnungsabschnitts in die zweite Vertiefung kann eine laterale Bewegung des Trägers und somit der gesamten Dichtung beschränkt, vermindert und/oder minimiert werden. Dadurch kann der Träger an beiden Gehäuseteilen gegenüber einer lateralen Bewegung gehindert werden, was zu einer weiteren Verbesserung der Sicherung der Dichtung gegenüber lateralen Bewegungen führen kann.

Optional ist der Träger aus einem Blech gebildet. Durch ein metallisches Blech kann der Träger besonders kontrolliert deformiert beziehungsweise verformt werden und weist im verformten Zustand eine ausreichende Steifigkeit auf, um die Dichtung gegenüber einer lateralen Bewegung zuverlässig zu sichern.

Gemäß einem Aspekt der Offenbarung wird eine Dichtungsanordnung für ein automatisiertes Schaltgetriebe für ein Fahrzeug, insbesondere Nutzfahrzeug, bereitgestellt, wobei die Dichtungsanordnung die oben beschriebene Dichtung, eine erste Gehäusekomponente mit einem eine erste Vertiefung umfassenden ersten Ausrichtungsabschnitt und eine zweite Gehäusekomponente mit einem zweiten Ausrichtungsabschnitt umfasst. Optional weist die Dichtung ein oder mehrere als optional und/oder vorteilhaft beschriebene Merkmale auf, um eine damit verbundene technische Wirkung zu erzielen.

Optional weist die zweite Gehäusekomponente in dem zweiten Ausrichtungsabschnitt eine zweite Grundfläche und einen von der zweiten Grundfläche abragenden zweiten Stempel zum Deformieren des Anordnungsabschnitts bei der Montage auf. Durch den Stempel kann die Verformung und/oder Deformation des Anordnungsabschnitts gezielt und wohldefiniert bewirkt werden. Die Anordnung und Ausprägung der Deformation des Anordnungsabschnitts ist dabei durch den zweiten Stempel definiert.

Optional weist die zweite Gehäusekomponente in dem zweiten Ausrichtungsabschnitt eine zweite Vertiefung auf; und die erste Gehäusekomponente weist in dem ersten Ausrichtungsabschnitt eine erste Grundfläche und einen von der ersten Grundfläche abragenden ersten Stempel zum Deformieren des Anordnungsabschnitts bei der Montage zum Eingreifen in die zweite Vertiefung auf. Damit sind die Gehäuseteile aufeinander abgestimmt und weisen im montierten Zustand auf gegenüberliegenden Seiten den Stempel und die Vertiefung auf, um den Träger mittels des Stempels in die Vertiefung drücken zu können.

Optional ist der zweite Stempel und/oder der erste Stempel als ein Dom ausgebildet. Ein Dom kann dabei als ein optional massiver und abragender Aufbau an dem jeweiligen Gehäuseteil definiert werden. Ein Dom kann dabei effektiv herstellbar sein und eine Ausreichende Verformung des Trägers bewirken.

Optional ist die erste Gehäusekomponente als ein Hauptgehäuse und die zweite Gehäusekomponente als eine Abdeckung ausgebildet. Damit kann einem typischen Anwendungsfall für ein automatisiertes Schaltgetriebe Rechnung getragen werden.

Gemäß einem Aspekt der Offenbarung wird ein automatisiertes Schaltgetriebe für ein Fahrzeug, insbesondere Nutzfahrzeug, bereitgestellt, umfassend die oben beschriebene Dichtungsanordnung. Optional weist die Dichtungsanordnung und/oder die Dichtung der Dichtungsanordnung ein oder mehrere als optional und/oder vorteilhaft beschriebene Merkmale auf, um eine damit verbundene technische Wirkung zu erzielen.

Gemäß einem Aspekt der Offenbarung wird ein Fahrzeug, insbesondere Nutzfahrzeug, bereitgestellt, umfassend das oben beschriebene automatisierte Schaltgetriebe. Optional weist das Schaltgetriebe, dessen Dichtungsanordnung und/oder die Dichtung der Dichtungsanordnung ein oder mehrere als optional und/oder vorteilhaft beschriebene Merkmale auf, um eine damit verbundene technische Wirkung zu erzielen.

Nachfolgend wird je eine Ausführungsform mit Bezug zu den Figuren beschrieben.
Fig. 1 zeigt schematisch ein Fahrzeug, insbesondere Nutzfahrzeug, gemäß einem Aspekt der Offenbarung;
Fig. 2 zeigt eine perspektivische Explosionsansicht einer Dichtungsanordnung gemäß dem Stand der Technik und eine perspektivische Ansicht einer Dichtung gemäß dem Stand der Technik;
Fig. 3 zeigt eine perspektivische Explosionsansicht und Detailansichten von Schnitten je einer Dichtungsanordnung gemäß dem Stand der Technik;
Fig. 4 zeigt eine perspektivische Explosionsansicht und Detailansichten von Schnitten je einer Dichtungsanordnung gemäß dem Stand der Technik; und
Fig. 5 zeigt eine perspektivische Explosionsansicht und Detailansichten von Schnitten je einer Dichtungsanordnung gemäß dem Stand der Technik.

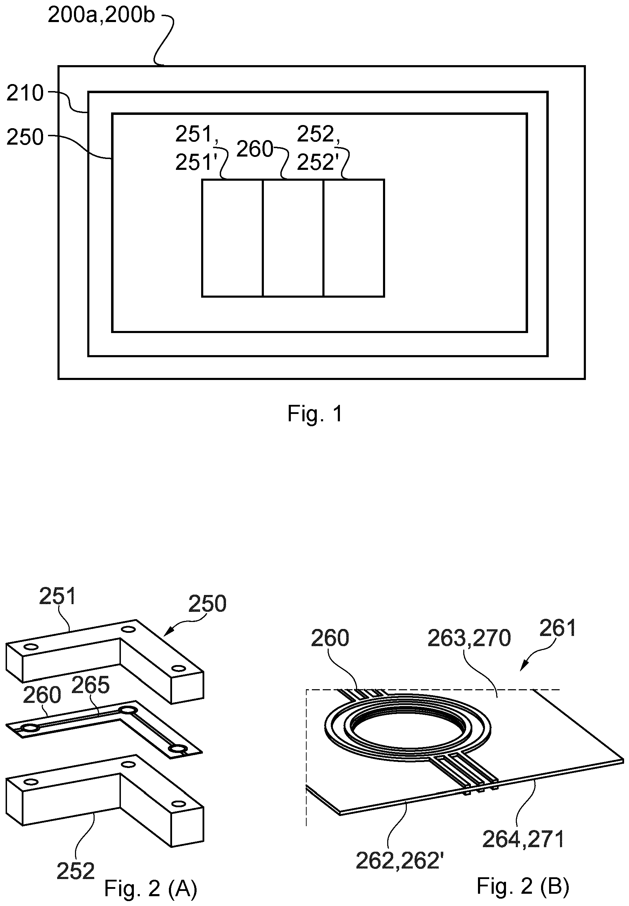

Figur 1 zeigt schematisch ein Fahrzeug 200a, insbesondere Nutzfahrzeug 200b, gemäß einem Aspekt der Offenbarung. Das Fahrzeug 200a, insbesondere Nutzfahrzeug 200b, wird im Folgenden als Fahrzeug 200a, 200b bezeichnet. Das Fahrzeug 200a, 200b ist ein Landfahrzeug. Das Fahrzeug 200a, 200b ist beispielsweise ein Zugfahrzeug einer mehrgliedrigen Zugfahrzeug-Anhängefahrzeugkombination und/oder ein eingliedriges Fahrzeug.

Das Fahrzeug 200a, 200b, umfasst ein automatisiertes Schaltgetriebe 210. Das automatisierte Schaltgetriebe 210 ist als Getriebe ausgebildet, das automatisch einen Gangwechsel in dem Fahrzeug 200a, 200b durchführt, ohne dass der Fahrer manuell kuppeln und/oder den Gang einlegen muss. Das automatisiertes Schaltgetriebe 210 kann dafür eine Kupplung und/oder einen anderen Aktuator umfassen, um den Gangwechsel zu bewerkstelligen. Dafür kann das automatisiertes Schaltgetriebe 210 elektromechanisch, pneumatisch und/oder hydraulisch kontrollierbar sein.

Das automatisiertes Schaltgetriebe 210 umfasst eine Dichtungsanordnung 250. Die Dichtungsanordnung 250 umfasst eine Dichtung 260, eine erste Gehäusekomponente 251 und eine zweite Gehäusekomponente 252. Die erste Gehäusekomponente 251 ist als ein Hauptgehäuse 251' und die zweite Gehäusekomponente 252 ist als eine Abdeckung 252` ausgebildet. Die Dichtung 260 ist als eine Flachdichtung ausgebildet und dazu eingerichtet, eine Schnittstelle zwischen der ersten Gehäusekomponente 251 und der zweiten Gehäusekomponente 252 gegenüber Umwelteinflüssen abzudichten.

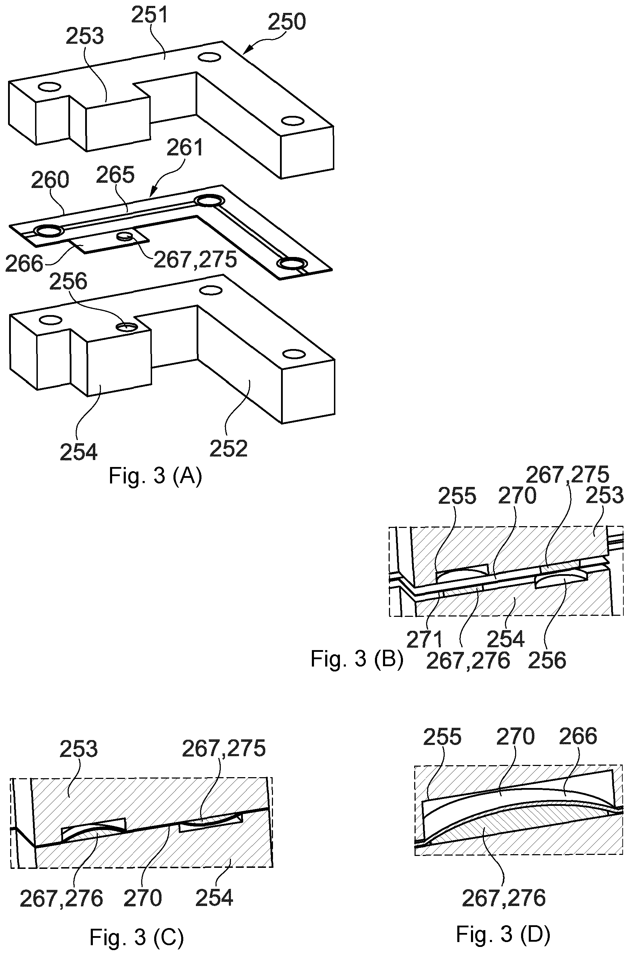

Die Dichtungsanordnung 250 und die Dichtung 260 sind mit Bezug zu Figuren 3 bis 5 beschrieben. Figur 2 beschreibt eine Dichtungsanordnung 250 und Dichtung 260 je gemäß dem Stand der Technik.

Figur 2 zeigt eine perspektivische Explosionsansicht einer Dichtungsanordnung 250 gemäß dem Stand der Technik und eine perspektivische Ansicht einer Dichtung 260 gemäß dem Stand der Technik. Dabei ist Figur 2 in zwei Abschnitte (A) und (B) unterteilt und Abschnitt (A) zeigt die Explosionsansicht der Dichtungsanordnung 250 und Abschnitt (B) zeigt die Dichtung 260.

Die Dichtungsanordnung 250 umfasst eine erste Gehäusekomponente 251, eine zweite Gehäusekomponente 252 und die Dichtung 260. Die Dichtung 260 weist eine Dichtbahn 265 auf. Die Dichtung 260 ist im montierten Zustand zwischen der ersten Gehäusekomponente 251 und der zweiten Gehäusekomponente 252 angeordnet. Die Dichtbahn 265 umfasst eine oder mehrere erhaben angeordnete Lippen beziehungsweise Rippen, die die Dichtungswirkung der Dichtung 260 hervorruft.

Die Dichtung 260 weist einen Schichtaufbau 261 auf. Dabei weist die Dichtung 260 zum Bilden des Schichtaufbaus 261 einen zweiseitigen Träger 262, eine auf einer ersten Seite 270 des Trägers 262 angeordnete erste Elastomerschicht 263 und eine auf einer von der ersten Seite 270 verschiedenen zweiten Seite 271 des Trägers 262 angeordnete zweite Elastomerschicht 264 auf. Die erste Seite 270 des Trägers 260 ist dabei im montierten Zustand der ersten Gehäusekomponente 251 zugewandt und die zweite Seite 271 des Trägers 260 ist im montierten Zustand der zweiten Gehäusekomponente 252 zugewandt.

Figur 3 zeigt eine perspektivische Explosionsansicht und Detailansichten von Schnitten je einer Dichtungsanordnung 250 gemäß dem Stand der Technik. Dabei ist Figur 3 in vier Abschnitte (A), (B), (C) und (D) unterteilt. Abschnitt (A) zeigt die Explosionsansicht der Dichtungsanordnung 250. Abschnitte (B), (C) und (D) zeigen je eine Detailansicht eines Schnitts der Dichtungsanordnung 250.

Die Dichtungsanordnung 250 gemäß Figur 3 ist eine Dichtungsanordnung 250 für ein automatisiertes Schaltgetriebe 210 für ein Fahrzeug 200a, 200b. Ein derartiges Fahrzeug 200a, 200b und ein derartiges automatisiertes Schaltgetriebe 210 sind mit Bezug zu Figur 1 beschrieben. Figur 3 wird unter Bezugnahme auf Figur 1 beschrieben.

Die die Dichtungsanordnung 250 gemäß Figur 3 umfasst die Dichtung 260, eine erste Gehäusekomponente 251 eine zweite Gehäusekomponente 252. Die erste Gehäusekomponente 251 weist einen ersten Ausrichtungsabschnitt 253 auf. Der erste Ausrichtungsabschnitt 253 weist eine erste Vertiefung 255 auf. Die zweite Gehäusekomponente 252 weist einen zweiten Ausrichtungsabschnitt 254 auf. Der zweite Ausrichtungsabschnitt 254 weist eine zweite Vertiefung 256 auf.

Die Dichtung 260 weist entlang einer Dichtbahn 265 zum Erzielen einer Dichtwirkung zwischen der ersten Gehäusekomponente 251 und der zweiten Gehäusekomponente 252 einen Schichtaufbau 261 auf. Der erste Ausrichtungsabschnitt 253 und der zweite Ausrichtungsabschnitt 254 sind gegenüber der Dichtbahn 265 lateral versetzt angeordnet. Zwischen dem ersten Ausrichtungsabschnitt 253 und dem zweiten Ausrichtungsabschnitt 254 ist nicht notwendigerweise eine Dichtbahn 265 und/oder das Erzielen einer Dichtungswirkung vorgesehen.

Die Dichtung 260 weist zum Bilden des Schichtaufbaus 261 einen zweiseitigen Träger 262, eine auf einer ersten Seite 270 des Trägers 262 angeordnete erste Elastomerschicht 263 und eine auf einer von der ersten Seite 270 verschiedenen zweiten Seite 271 des Trägers 262 angeordnete zweite Elastomerschicht 264 auf. Die Dichtung 260 ist dazu eingerichtet, im montierten Zustand, mit der ersten Elastomerschicht 263 die erste Gehäusekomponente 251 zu kontaktieren und mit der zweiten Elastomerschicht 264 die zweite Gehäusekomponente 252 zu kontaktieren. Der Träger 262 ist aus einem Blech 262`, insbesondere einem Stahlblech, gebildet. Die Dichtbahn 265 ist durch eine aus Elastomer gefertigte Dichtlinie, Lippe beziehungsweise Rippe gebildet. Die Dichtbahn 265 kann beidseitig, also von der ersten Elastomerschicht 263 und von der zweiten Elastomerschicht 264 ausgebildet sein (siehe auch Figur 2 (B)).

Der Träger 262 weist einen sich bezüglich der Dichtbahn 265 lateral erstreckenden Anordnungsabschnitt 266 auf. Der Anordnungsabschnitt 266 ist derart angeordnet, dass der Anordnungsabschnitt 266 im montierten Zustand zwischen dem ersten Ausrichtungsabschnitt 253 und dem zweiten Ausrichtungsabschnitt 254 angeordnet ist. In dem Anordnungsabschnitt 266 ist das Erzielen einer Dichtwirkung entbehrlich. Das Anordnungsabschnitt 266 ist daher als ein lateraler Fortsatz des Trägers 262 ausgebildet.

Die erste Gehäusekomponente 251 weist in dem ersten Ausrichtungsabschnitt 253 eine erste Vertiefung 255 auf. Die zweite Gehäusekomponente 252 weist in dem zweiten Ausrichtungsabschnitt 254 eine zweite Vertiefung 256 auf. Die Vertiefungen 255, 256 sind jeweils zylinderförmig beziehungsweise als ein Sackloch ausgebildet.

Der Anordnungsabschnitt 266 ist dazu eingerichtet, bei einer Montage der Dichtung 260 zwischen der erste Gehäusekomponente 251 und der zweite Gehäusekomponente 252 durch den zweiten Ausrichtungsabschnitt 254 deformiert zu werden und in die erste Vertiefung 255 einzugreifen. Der Anordnungsabschnitt 266 ist dazu eingerichtet, bei einer Montage der Dichtung 260 zwischen der erste Gehäusekomponente 251 und der zweite Gehäusekomponente 252 durch den ersten Ausrichtungsabschnitt 254 deformiert zu werden und in die zweite Vertiefung 256 einzugreifen. Dabei ist der Anordnungsabschnitt 266 dazu eingerichtet, bei der Montage der Dichtung 260 die erste Vertiefung 255 und die zweite Vertiefung 256 mit dem Anordnungsabschnitt 266 formschlüssig zu verbinden. Dabei wird der Träger 262 beziehungsweise das Blech 262' in dem Anordnungsabschnitt 266 in die Vertiefungen 255, 256 eingedrückt. Dabei bildet sich eine Kontaktkante und/oder Kontaktfläche zwischen dem Anordnungsabschnitt 266 und den Vertiefungen 255, 256 beziehungsweise mit den Ausrichtungsabschnitten 253, 254 und so mit den Gehäuseteilen 251, 252 aus. Dabei kann der Anordnungsabschnitt 266 um bis zu 1 mm deformiert werden.

Die Dichtung 260 weist in dem Anordnungsabschnitt 266 ein auf dem Träger 262 angeordnetes erstes Deformationselement 275 zum Deformieren des Anordnungsabschnitts 266 bei der Montage auf. Das erste Deformationselement 275 ist auf der ersten Seite 270 des Trägers 262 angeordnet. Die Dichtung 260 weist zudem in dem Anordnungsabschnitt 266 ein auf dem Träger 262 angeordnetes zweites Deformationselement 275 zum Deformieren des Anordnungsabschnitts 266 bei der Montage auf. Das zweite Deformationselement 276 ist auf der zweiten Seite 271 des Trägers 262 angeordnet. Bei der Montage drückt somit das erste Gehäuseteil 251 auf das erste Deformationselement 275 und drückt so den Träger 262 in die zweite Vertiefung 256, und das zweite Gehäuseteil 252 drückt auf das zweite Deformationselement 276 und drückt so den Träger 262 in die erste Vertiefung 255. Dafür sind die Deformationselemente 275, 276 den Vertiefungen 255, 256 entsprechend angeordnet und/oder dimensioniert.

Jedes der Deformationselemente 275, 276 ist durch eine weitere Elastomerschicht 267 gebildet. Die Deformationselement 275, 276 weisen jeweils einen kreisförmigen Querschnitt auf. Die Deformationselement 275, 276 sind also beispielsweise als 1 mm starke Scheibe aus Elastomer, beispielsweise aus Silikon ausgebildet.

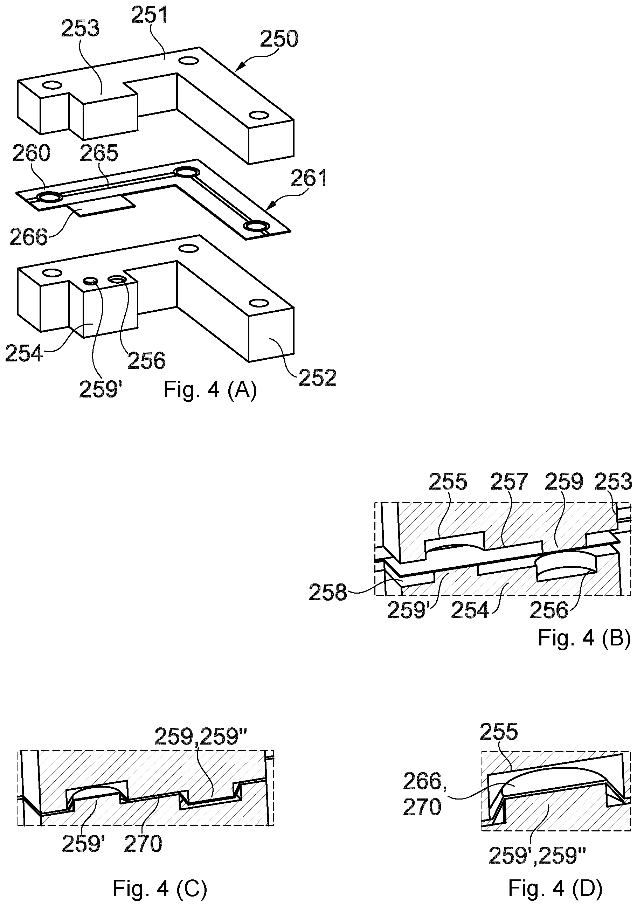

Figur 4 zeigt eine perspektivische Explosionsansicht und Detailansichten von Schnitten je einer Dichtungsanordnung 250 gemäß dem Stand der Technik. Dabei ist Figur 4 in vier Abschnitte (A), (B), (C) und (D) unterteilt. Abschnitt (A) zeigt die Explosionsansicht der Dichtungsanordnung 250. Abschnitte (B), (C) und (D) zeigen je eine Detailansicht eines Schnitts der Dichtungsanordnung 250.

Die Dichtungsanordnung 250 gemäß Figur 4 ist eine Alternative zu der Dichtungsanordnung 250 gemäß Figur 3. Figur 4 wird unter Bezugnahme auf Figur 3 beschrieben, wobei die Unterschiede zwischen den Dichtungsanordnungen 250 gemäß Figuren 3 und 4 beschrieben werden.

Gemäß Figur 4 in die Dichtung 260 in dem Anordnungsabschnitts 266 nur aus dem Träger 262 beziehungsweise dem Blech 262' gebildet. Die Deformation des Anordnungsabschnitts 266 ergibt sich zudem durch die Ausbildung der Gehäusekomponenten 251, 252.

Die erste Gehäusekomponente 251 weist in dem ersten Ausrichtungsabschnitt 253 eine erste Grundfläche 257 und einen von der ersten Grundfläche 257 abragenden ersten Stempel 259 zum Deformieren des Anordnungsabschnitts 266 bei der Montage zum Eingreifen in die zweite Vertiefung 256 auf. Die zweite Gehäusekomponente 252 weist in dem zweiten Ausrichtungsabschnitt 254 eine zweite Grundfläche 258 und einen von der zweiten Grundfläche 258 abragenden zweiten Stempel 259` zum Deformieren des Anordnungsabschnitts 266 bei der Montage auf. Die Stempel 259, 259" sind als Dome 259" ausgebildet und dazu eingerichtet, den Träger 262 zu deformieren. Die Stempel 259, 259" beziehungsweise die Dome 259" entsprechend den Vertiefungen 255, 256 angeordnet und/oder dimensioniert. Beispielsweise sind die Stempel 259, 259" beziehungsweise die Dome 259" ist etwa 1 mm hohe Zylinder ausgebildet.

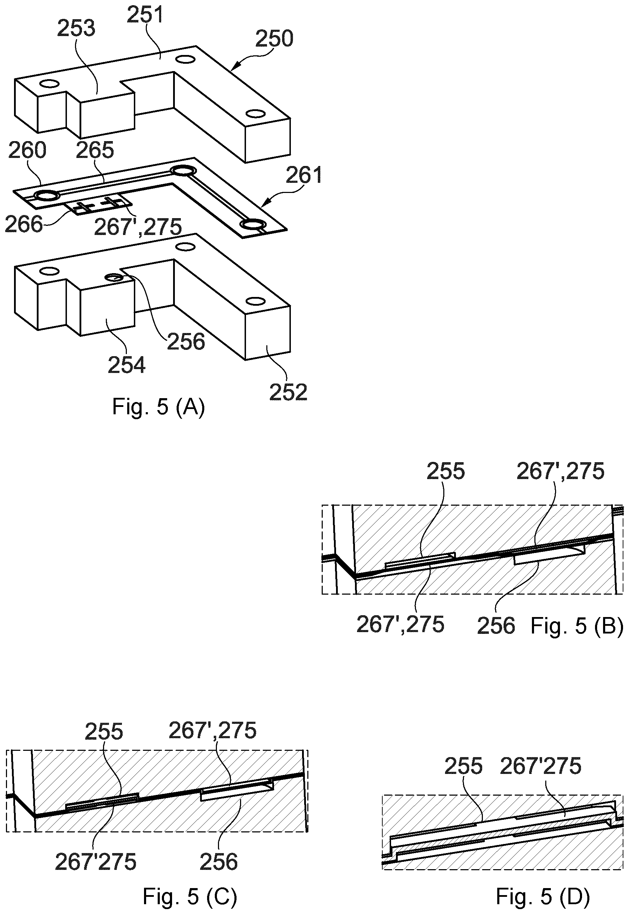

Figur 5 zeigt eine perspektivische Explosionsansicht und Detailansichten von Schnitten je einer Dichtungsanordnung 250 gemäß dem Stand der Technik. Dabei ist Figur 5 in vier Abschnitte (A), (B), (C) und (D) unterteilt. Abschnitt (A) zeigt die Explosionsansicht der Dichtungsanordnung 250. Abschnitte (B), (C) und (D) zeigen je eine Detailansicht eines Schnitts der Dichtungsanordnung 250.

Die Dichtungsanordnung 250 gemäß Figur 5 ist eine alternative zu der Dichtungsanordnung 250 gemäß Figur 3. Figur 5 wird unter Bezugnahme auf Figur 3 beschrieben, wobei die Unterschiede zwischen den Dichtungsanordnungen 250 gemäß Figuren 3 und 5 beschrieben werden.

Gemäß Figur 5 ist jedes der Deformationselemente 275 ,276 durch eine Prägung 267'gebildet. Mit anderen Worten ist das erste Deformationselement 275 ein lokal in Richtung des ersten Gehäuseteils 251 ragender Abschnitt des Anordnungsabschnitts 266. Das zweite Deformationselement 276 ist ein lokal in Richtung des zweiten Gehäuseteils 252 ragender Abschnitt des Anordnungsabschnitts 266. Die Deformationselemente 275 ,276 weisen jeweils einen kreuzförmigen Querschnitt auf.

### Bezugszeichen (Teil der Beschreibung)

- 200a: Fahrzeug
- 200b: Nutzfahrzeug

- 210: automatisiertes Schaltgetriebe

- 250: Dichtungsanordnung
- 251: erste Gehäusekomponente
- 251': Hauptgehäuse
- 252: zweite Gehäusekomponente
- 252': Abdeckung
- 253: erster Ausrichtungsabschnitt
- 254: zweiter Ausrichtungsabschnitt
- 255: erste Vertiefung
- 256: zweite Vertiefung
- 257: erste Grundfläche
- 258: zweite Grundfläche
- 259: erster Stempel
- 259`: zweiter Stempel
- 259": Dom

- 260: Dichtung
- 261: Schichtaufbau
- 262: Träger
- 262`: Blech
- 263: erste Elastomerschicht
- 264: zweite Elastomerschicht
- 265: Dichtbahn
- 266: Anordnungsabschnitt
- 267: weitere Elastomerschicht
- 267`: Prägung

- 270: erste Seite
- 271: zweite Seite
- 275: Deformationselement
- 276: zweites Deformationselement

## Patentansprüche

1. Dichtung (260) für eine Dichtungsanordnung (250) für ein automatisiertes Schaltgetriebe (210) für ein Fahrzeug (200a), insbesondere Nutzfahrzeug (200b), wobei die Dichtungsanordnung (250) eine erste Gehäusekomponente (251) mit einem eine erste Vertiefung (255) umfassenden ersten Ausrichtungsabschnitt (253) und eine zweite Gehäusekomponente (252) mit einem zweiten Ausrichtungsabschnitt (254) umfasst; und
- die Dichtung (260) entlang einer Dichtbahn (265) zum Erzielen einer Dichtwirkung zwischen der ersten Gehäusekomponente (251) und der zweiten Gehäusekomponente (252) einen Schichtaufbau (261) aufweist;
- die Dichtung (260) zum Bilden des Schichtaufbaus (261) einen zweiseitigen Träger (262), eine auf einer ersten Seite (270) des Trägers (262) angeordnete erste Elastomerschicht (263) und eine auf einer von der ersten Seite (270) verschiedenen zweiten Seite (271) des Trägers (262) angeordnete zweite Elastomerschicht (264) aufweist;
- der Träger (262) einen sich bezüglich der Dichtbahn (265) lateral erstreckenden Anordnungsabschnitt (266) aufweist; wobei
- der Anordnungsabschnitt (266) dazu eingerichtet ist, bei einer Montage der Dichtung (260) zwischen der erste Gehäusekomponente (251) und der zweite Gehäusekomponente (252) durch den zweiten Ausrichtungsabschnitt (254) deformiert zu werden und in die erste Vertiefung (255) einzugreifen.

2. Dichtung (260) nach Anspruch 1, wobei der Anordnungsabschnitt (266) dazu eingerichtet ist, bei der Montage der Dichtung (260) die erste Vertiefung (255) mit dem Anordnungsabschnitt (266) formschlüssig zu verbinden.

3. Dichtung (260) nach Anspruch 1 oder 2, wobei die Dichtung (260) in dem Anordnungsabschnitt (266) ein auf dem Träger (262) angeordnetes erstes Deformationselement (275) zum Deformieren des Anordnungsabschnitts (266) bei der Montage aufweist.

4. Dichtung (260) nach Anspruch 3, wobei
- die Dichtung (260) dazu eingerichtet ist, im montierten Zustand, mit der ersten Elastomerschicht (263) die erste Gehäusekomponente (251) zu kontaktieren und mit der zweiten Elastomerschicht (264) die zweite Gehäusekomponente (252) zu kontaktieren; und
- das erste Deformationselement (275) auf der ersten Seite (270) des Trägers (262) angeordnet ist.

5. Dichtung (260) nach Anspruch 3 oder 4, wobei das Deformationselement (275) durch eine weitere Elastomerschicht (267) und/oder durch eine Prägung (267`) gebildet ist.

6. Dichtung (260) nach einem der Ansprüche 3 bis 5, wobei das Deformationselement (275) einen kreisförmigen und/oder kreuzförmigen Querschnitt aufweist.

7. Dichtung (260) nach einem der vorherigen Ansprüche, wobei
- der zweite Ausrichtungsabschnitt (254) eine zweite Vertiefung (256) aufweist; und
- der Anordnungsabschnitt (266) dazu eingerichtet ist, bei einer Montage der Dichtung (260) zwischen der erste Gehäusekomponente (251) und der zweite Gehäusekomponente (252) durch den ersten Ausrichtungsabschnitt (254) deformiert zu werden und in die zweite Vertiefung (256) einzugreifen.

8. Dichtung (260) nach einem der vorherigen Ansprüche, wobei der Träger (262) aus einem Blech (262`) gebildet ist.

9. Dichtungsanordnung (250) für ein automatisiertes Schaltgetriebe (210) für ein Fahrzeug (200a), insbesondere Nutzfahrzeug (200b), wobei die Dichtungsanordnung (250) die Dichtung (260) nach einem der vorangehenden Ansprüche, eine erste Gehäusekomponente (251) mit einem eine erste Vertiefung (255) umfassenden ersten Ausrichtungsabschnitt (253) und eine zweite Gehäusekomponente (252) mit einem zweiten Ausrichtungsabschnitt (254) umfasst.

10. Dichtungsanordnung (250) nach Anspruch 9, wobei die zweite Gehäusekomponente (252) in dem zweiten Ausrichtungsabschnitt (254) eine zweite Grundfläche (258) und einen von der zweiten Grundfläche (258) abragenden zweiten Stempel (259`) zum Deformieren des Anordnungsabschnitts (266) bei der Montage aufweist.

11. Dichtungsanordnung (250) nach Anspruch 9 oder 10, wobei
- die zweite Gehäusekomponente (252) in dem zweiten Ausrichtungsabschnitt (254) eine zweite Vertiefung (256) aufweist; und
- die erste Gehäusekomponente (251) in dem ersten Ausrichtungsabschnitt (253) eine erste Grundfläche (257) und einen von der ersten Grundfläche (257) abragenden ersten Stempel (259) zum Deformieren des Anordnungsabschnitts (266) bei der Montage zum Eingreifen in die zweite Vertiefung (256) aufweist.

12. Dichtungsanordnung (250) nach Anspruch 10 oder 11, wobei der zweite Stempel (259') und/oder der erste Stempel (259) als ein Dom (259") ausgebildet ist.

13. Dichtungsanordnung (250) nach einem der Ansprüche 9 bis 12, wobei die erste Gehäusekomponente (251) als ein Hauptgehäuse (251') und die zweite Gehäusekomponente (252) als eine Abdeckung (252`) ausgebildet ist.

14. Automatisiertes Schaltgetriebe (210) für ein Fahrzeug (200a), insbesondere Nutzfahrzeug (200b), umfassend die Dichtungsanordnung (250) nach einem der Ansprüche 9 bis 13.

15. Fahrzeug (200a), insbesondere Nutzfahrzeug (200b), umfassend ein automatisiertes Schaltgetriebe (210) nach Anspruch 14.
